(19) **Europäisches Patentamt / European Patent Office / Office européen des brevets**

(11) **EP 3 589 980 B1**

(12) # FASCICULE DE BREVET EUROPEEN

(45) Date de publication et mention de la délivrance du brevet:
**20.09.2023 Bulletin 2023/38**

(21) Numéro de dépôt: **18706826.7**

(22) Date de dépôt: **15.02.2018**

(51) Classification Internationale des Brevets (IPC):
**G01T 1/02** $^{(2006.01)}$       **G01T 1/20** $^{(2006.01)}$

(52) Classification Coopérative des Brevets (CPC):
**G01T 1/023; G01T 1/201**

(86) Numéro de dépôt international:
**PCT/FR2018/050359**

(87) Numéro de publication internationale:
**WO 2018/158518 (07.09.2018 Gazette 2018/36)**

(54) **PROCÉDÉ DE MESURE ET DE REPRÉSENTATION DU NIVEAU DES DOSES LOCALES D'IRRADIATION**

VERFAHREN ZUR MESSUNG UND DARSTELLUNG DER STÄRKE VON LOKALEN BESTRAHLUNGSDOSEN

METHOD FOR MEASURING AND REPRESENTING THE LEVEL OF LOCAL IRRADIATION DOSES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.03.2017 FR 1751740**

(43) Date de publication de la demande:
**08.01.2020 Bulletin 2020/02**

(73) Titulaire: **Fibermetrix**
**67000 Strasbourg (FR)**

(72) Inventeurs:
• **MUNIER, Mélodie**
**67000 Strasbourg (FR)**
• **CARBILLET, Fanny**
**67000 Strasbourg (FR)**
• **MORENO, Ramiro**
**31500 Toulouse (FR)**

(74) Mandataire: **IP Trust**
**2, rue de Clichy**
**75009 Paris (FR)**

(56) Documents cités:
**WO-A2-03/047694    US-A- 5 880 475**
**US-A1- 2008 149 835    US-A1- 2013 105 692**
**US-B1- 6 330 299**

• **Duncan C Thomas: "Measurement error amd exposure models" In: "Statistical Methods in Environmental Epidemiology", 1 janvier 2009 (2009-01-01), Oxford University Press, Oxford, XP055437186, ISBN: 978-0-19-923289-5 page 222, le document en entier**

## Description

Domaine de l'invention

La présente invention concerne un procédé de mesure en temps réel de la dose de rayonnements reçue par un patient, ou éventuellement un objet soumis à un flux de rayonnements ionisants.

Il est important de connaître en temps réel la dose reçue par un patient lors d'examens, par exemple lors d'actes de radiologie interventionnelle car l'irradiation cutanée peut provoquer des effets déterministes.

En radioprotection, la dose absorbée, ou, plus concisément, la dose, est l'énergie déposée par unité de masse par un rayonnement ionisant. On parle également de dose radiative ou dose radioactive en physique nucléaire.

La connaissance de la dose permet de quantifier l'énergie déposée dans un tissu biologique pour prévoir les effets déterministes et stochastiques d'une irradiation : planning de soins des cancers en radiothérapie ou curiethérapie, prédiction des risques de maladie en cas d'exposition accidentelle ou volontaire (radiologie), définition de normes de sécurité dans l'industrie nucléaire, etc.

La radiologie interventionnelle regroupe l'ensemble des actes médicaux diagnostiques et/ou thérapeutiques guidés par radioscopie à savoir notamment :

- Les actes radioguidés invasifs diagnostiques et/ou thérapeutiques
- Les actes chirurgicaux utilisant des rayonnements ionisants en per-opératoire.

La numérisation, l'évolution des implants, la facilité d'obtention des images, concourent à l'augmentation du nombre de ces actes.

On comptait, en 2002, plus de 70 millions d'actes radiologiques en France. 1,5% de ces actes concernent la radiologie interventionnelle mais 20% de la dose totale est délivrée par la radiologie médicale. Il est à noter que ceci est une hypothèse basse. D'autre part, certains de ces actes délivrent des doses équivalentes à une séance de radiothérapie. Il est donc particulièrement important de connaître et d'optimiser les doses délivrées en radiologie interventionnelle.

Pour renforcer la maitrise de doses, la Commission électrotechnique internationale (CEI) a imposé que les installations radiologiques affichent au pupitre des données dosimétriques relatives à chaque examen et à chaque séquence de cet examen (Norme CEI 60601-2-43:2010 Mars 2010 « Appareils électromédicaux - Partie 2-43 : exigences particulières pour la sécurité de base et les performances essentielles des appareils à rayonnement X lors d'interventions »). Il peut s'agir notamment du Produit Dose Surface (PDS) en radiologie interventionnelle.

La dose absorbée peut être calculée (plus ou moins précisément) à l'aide d'outils de simulation informatique. En clinique, l'application la plus importante de ces méthodes de calcul est l'optimisation de la distribution de dose délivrée aux patients pour la radiothérapie, par le biais des systèmes de planification des traitements.

Toutefois, en radiologie interventionnelle, les calculs de dose n'ont pas la simplicité de ceux de la radiologie classique notamment en raison de la multiplicité des angles d'irradiation, des modifications en temps-réel des paramètres d'acquisition pendant un même examen.

Pour objectiver la dose d'irradiation en radiologie interventionnelle, des indicateurs sont disponibles :

- le produit dose surface (PDS) : indispensable au suivi de la dose délivrée. Attention : la chambre d'ionisation qui le mesure cumule toutes les incidences ;
- le temps de scopie, lui aussi indispensable mais mal corrélé à la dose cutanée ;
- le nombre d'images (informatif mais insuffisant pour suivre les doses délivrées) ;
- le kerma dans l'air au point de référence interventionnel (PRI) : les installations affichent une valeur de kerma dans l'air (ou dose dans l'air) au PRI (souvent situé 15 cm en amont de l'isocentre, sur l'axe du faisceau, soit à environ 60 cm du foyer du tube). Cette valeur est calculée à partir de la mesure du PDS. Elle ne prend pas en compte la contribution du rayonnement rétrodiffusé vers la peau du patient produit par celui-ci, l'atténuation de la table et du matelas, et cumule la valeur de chaque exposition (graphie et scopie) en considérant le faisceau comme étant fixe tout au long de la procédure (non/prise en compte des différentes incidences).

Le produit Dose Surface est égal à la dose moyenne absorbée dans l'air intégrée sur la surface du faisceau de rayons X dans un plan perpendiculaire à son axe, en l'absence de milieu diffusant par la surface de cette section, et est noté $D(x,y)$ tel que :

$$PDS = \int_A D(x,y)dxdy$$

Si la dose est constante sur toute la section transverse du faisceau, ce qui est généralement admis, le PDS peut s'exprimer comme le produit de la dose par la surface transverse S du faisceau :

$$PDS = D.S$$

Unité : Gy.m2, mGy.cm2, ...
Cet indice est directement mesurable, dans l'air ou dans un fantôme, grâce à une chambre d'ionisation de type « chambre à transmission ».

La dosimétrie des faisceaux de particules sans charge (photons ou neutrons) est caractérisée par la grande physique appelée kerma (acronyme de *Kinetic energy released per unit mass* pour « énergie cinétique délivrée par unité de masse »). Le kerma peut être défini comme suit :

- considérons un faisceau ionisant de particules sans charge traversant un milieu quelconque (de l'air, de l'eau, un mur, un organe, etc.) ;
- considérons un petit élément de ce milieu, de masse dm ;
- soit $dE_{tr}$ l'énergie perdue par le faisceau dans ce petit élément de matière (le *transfert d'énergie,* sous forme d'énergie cinétique transférée à des particules chargée de ce milieu).

Le kerma X est alors le rapport entre le transfert d'énergie dans ce petit élément et la masse de cet élément: $K = dE_{tr} / dm$.

L'unité de kerma est le gray, noté Gy : 1 Gy = 1 J/kg.

L'estimation de la dose absorbée à la peau est recommandée. Elle n'est pas disponible en cours d'intervention, mais peut être réalisée a posteriori. La cartographie de la distribution de la dose au niveau de la peau est souhaitable.

Une autre solution consiste à utiliser des sondes disposées sur la peau du patient, pour fournir un mesure des doses irradiantes par des dosimètres ayant comme spécificité de mesurer en direct et localement la dose de rayons X délivrée sur le patient lors d'un examen. Le dosimètre est constitué par des fibres dopées formant un scintillateur produisant des photons lors de l'irradiation par un rayonnement ionisant. Il forme une matrice de points de mesure organisés selon une topologie définie par la position des sondes par rapport au patient. Par défaut, les sondes sont disposées en des endroits prédéfinis.

## Etat de la technique

On connaît dans l'état de la technique la demande de brevet internationale WO2003047694A2 décrivant une plaquette de dosimètre de rayonnement à usage externe comprenant un substrat contenant une couche de circuit de détection avec au moins un MOSFET ou RADFET variant une tension de seuil de façon prédictible et détectable lors de l'exposition à un rayonnement, la plaquette de dosimètre étant adaptée pour être insérée dans un dispositif de lecture et coupler électriquement le dispositif de lecture à la couche de circuit, et le substrat comprenant des surfaces primaires supérieure et inférieure opposées, et le substrat étant élastique et adaptable à l'épiderme d'un patient, caractérisé en ce qu'en cours d'usage, la couche de circuit est autonome et dénuée de fils conducteurs déployés à l'extérieur la raccordant à un élément opérationnel, et en ce que la plaquette est une plaquette de dosimètre à usage unique à fixation adhésive sur l'épiderme d'un patient à l'aide d'un adhésif détachable sur la surface primaire inférieure.

On connaît aussi le brevet français FR2981757 décrivant le principe général d'un procédé de détermination d'une dose d'irradiation déposée dans un scintillateur par un rayonnement ionisant. Ce procédé consiste à :

- irradier le scintillateur pendant un temps prédéterminé ;
- détecter un instant d'excitation du scintillateur avec un premier photodétecteur; puis
- détecter un instant de réception d'un photon de scintillation avec un deuxième photodétecteur, fonctionnant en régime de comptage de photon unique ;
- identifier chaque séquence constituée par une détection d'instant d'excitation par le premier photodétecteur, et une détection d'instant de réception par le deuxième photodétecteur à un événement de coïncidence ;
- compter le nombre d'événements de coïncidence;
- obtenir la dose d'irradiation déposée pendant le temps d'irradiation en fonction du nombre d'événements de coïncidence comptés et d'un facteur de proportionnalité prédéterminé.

On connaît aussi la demande de brevet européen EP 1581824 décrivant un procédé de mesure en temps réel d'une dose de rayonnement radiologique absorbée par une région à inspecter soumise à un flux de rayonnements radiologiques, comprenant les étapes consistant à :

(a) détecter le rayonnement incident en au moins un point de la région à inspecter à l'aide d'au moins un premier faisceau de fibres optiques de mesure contenant au moins une fibre placée dans ladite région à inspecter et adapter pour générer un signal lumineux lorsqu'elle reçoit un rayonnement radiologique,
(b) mesurer ledit signal lumineux en dehors de la région à inspecter après transmission le long de la fibre optique de mesure, et
(c) déterminer la dose de rayonnement radiologique reçue par ladite fibre optique de mesure à partir dudit signal lumineux.

Le dispositif mis en œuvre est un équipement de mesure en temps réel d'une dose de rayonnement radiologique absorbée par une région à inspecter soumise à un flux de rayonnements radiologiques, comprenant :

- un dosimètre comprenant au moins un premier faisceau de fibres optiques de mesure, contenant au moins une fibre placée dans ladite région à inspecter et adaptée pour générer un signal lumineux lorsqu'elle reçoit un rayonnement radiologique, afin de détecter le rayonnement incident en au moins un point de la région à inspecter,

- des moyens pour mesurer ledit signal lumineux en dehors de la région à inspecter après transmission le long de la fibre optique de mesure, et
- des moyens pour déterminer la dose de rayonnement radiologique reçue par ladite fibre optique de mesure à partir dudit signal lumineux.

On connaît aussi dans l'art antérieur la demande de brevet américaine US14/338,464 décrivant un système d'acquisition d'image, d'une table de support du patient et d'un processeur informatique qui calcule l'angulation d'un faisceau de rayonnement dirigé vers le patient dans la procédure d'imagerie d'angiographie par rapport à la table.

Le procédé consiste à calculer une angulation de la table; calculer l'intersection du faisceau de rayonnement par rapport à une grille bidimensionnelle; calculer la dose de rayonnement appliquée à l'intersection du faisceau de rayonnement vers chacune des zones prédéfinies de la grille bidimensionnelle; calculer l'orientation du patient par rapport à la grille bidimensionnelle de zones prédéfinies; et créer un affichage graphique illustrant une agrégation de la dose de rayonnement appliquée à chacune des zones prédéfinies de la grille bidimensionnelle à des fins de visualisation par un utilisateur.

Cette solution de l'art antérieur permet de déterminer la dose d'irradiation sur la peau du patient, calculée à partir de la dose mesurée sur la table en fonction de l'angulation bras/table. Cette dose à la peau dépend de la distance, l'angle, la densité/nature de la peau et correspond à la dose mesurée dans l'air.

On connaît aussi dans l'art antérieur la demande de brevet américaine US14/510,815 décrivant un autre exemple connu de système pour déterminer une dose de rayonnement appliquée à différents organes d'un sujet exposé à une acquisition d'image diagnostique par un dispositif d'imagerie à balayage. À partir d'une image de repérage, un processeur d'ordinateur permet de calculer un contour d'une extrémité du sujet exposé à partir de l'image de repérage en deux dimensions ; calculer un contour d'un premier organe dépendant de l'intensité de l'échelle de gris de la pluralité de pixels qui comprennent l'image de repérage en deux dimensions ; calculer un contour d'au moins un étage anatomique en fonction d'une orientation géométrique prédéfinie par rapport au contour du premier organe ; et appliquer des critères auxologiques prédéfinis pour calculer un contour d'un second organe dépendant d'une orientation géométrique prédéfinie par rapport au contour du ou des étages anatomiques ; et créer un affichage illustrant la mesure de la dose appliquée au niveau de la zone définie par le contour de l'étage anatomique.

Le principe de cette solution de l'art antérieur consiste à déterminer des organes hors champs en fonction des organes dans le champ et en fonction de la connaissance des ratios dimensionnels entre organes.

Un autre document de l'art antérieur, le brevet chinois CN 1736333 propose un appareil de tomodensitométrie, comprenant un portique à rayons X supportant une source de rayons X située en face d'un ensemble de détecteur de faisceau. Une partie logique comprend un mécanisme de commande du balayage de l'objet pour générer une première image de détection balayée. Un premier modèle de patient elliptique est généré à partir de l'image numérisée.

Le modèle ellipsoïdal du patient constitue une approximation du diamètre correspondant pour le calcul de la dose et son affichage en relation avec le moyen de commande.

La demande de brevet US20130105692A1 décrit une sonde dosimétrique à fibre optique, pour capter la dose de rayonnement, comprenant une fibre optique ayant une extrémité libre et une extrémité sensible, une fenêtre ayant un côté sensible et un côté arrière ; une couche radiosensible entre l'extrémité sensible de la fibre optique et un côté sensible de la fenêtre, la couche radiosensible étant constituée d'un matériau ayant une propriété optique qui varie avec la dose de rayonnement absorbée, une certaine quantité du matériau correspondant à une sensibilité prédéterminée au rayonnement ; la fenêtre et la fibre optique présentant avec le rayonnement une interaction équivalente à l'interaction proche de l'eau, et étant compatibles au milliroentgen.

Le brevet US6330299 décrit un procédé pour déterminer le produit de surface de dose (DAP) dans un système d'imagerie à rayons X.

La demande de brevet US2008149835 décrit des dosimètres sont logés dans des poches de boîtier de dosimètre d'un raccord de dosimètre usure comprenant: porter des corps principaux qui couvrent des positions de mesure sur au moins les corps sujets, et peuvent être montés de manière amovible sur les corps sujets, et le des poches de logement de dosimètre 130 prévues à des positions qui arrivent aux positions de mesure lorsque les corps principaux d'usure sont montés sur les corps sujets, puis les corps principaux d'usure sont montés sur les corps sujets.

La demande de brevet US2008149835 décrit une dispositif comportant une multitudes de poches pour insérer des films dosimétriques.

On connaît aussi dans l'état de la technique les articles suivants :

1. Nishikido, F., Moritake, T., Ito, H. & Yamaya, T. A prototype real-time dose distribution monitoring system using plastic scintillators connected to optical fiber for interventional radiology. (2013).
2. Chida Phd, K. et al. Real-time patient radiation dosimeter for use in interventional radiology. (2016). doi:10.1016/j.ejmp.2016.10.013
3. Thomas, Duncan. (2009). Statistical Methods in Environmental Epidemiology. Enfin, on connaît aussi de la demande US5880475 des sondes constituées d'une fibre scintillante couplée à une fibre optique au moyen d'un fourreau.

## Inconvénients de l'art antérieur

Les solutions de l'art antérieur présentent plusieurs inconvénients.

En premier lieu, les données fournies par les solutions de l'art antérieur manquent de résolution pour établir une cartographie complète des niveaux d'irradiation des différentes zones corporelles d'un patient, notamment les zones et organes qui ne sont pas situés directement dans la zone d'exposition au faisceau de rayonnement.

En second lieu, les solutions de l'art antérieur nécessitent des informations additionnelles qui ne sont pas faciles à réunir, ou sinon manquent de précision.

En troisième lieu, aujourd'hui, les solutions connues dans l'art antérieur ne permettent pas de déterminer la dose maximale délivrée à la peau en temps réel ni de fournir des mesures en 3D ou manquent de précision. Cet aspect est pourtant important, par exemple en neuro-interventionnel où un large panel d'angulation peut être utilisé.

Certaines solutions nécessitent la mise en œuvre d'un très grand nombre de fibres de détection, et leur intégration sur la table supportant le patient peut être relativement contraignante rendant le système assez difficile à mettre en place.

## Solution apportée par l'invention

Afin de répondre à ces inconvénients, l'invention concerne selon son acception la plus générale un procédé de mesure et de représentation du niveau des doses locales d'irradiation selon au moins deux dimensions présentant les caractéristiques énoncées dans la revendication 1.

Le procédé décrit comporte :

- une étape de positionnement de N sondes $S_i$, sensibles aux rayonnements irradiants correspondant chacune à une zone locale $Z_i$ selon une topologie connue,
- une étape d'acquisition par chacune desdites sondes du niveau d'irradiation $IS_i$ détecté et d'enregistrement périodique des valeurs numériques $IS_i(t)$
- une étape de conversion desdites valeurs numériques $IS_i(t)$ en valeurs $DS_i(t)$ correspondant à la dose de rayonnement appliquée à chacune des zones Z associées à une sonde $S_i$, en fonction d'une table de calibration

    caractérisé en ce qu'il comporte en outre, pendant la séquence de mesure, des étapes de calcul d'interpolation spatiale d'au moins une valeur estimée de niveau d'irradiation $IS_{iv}(t)$ d'au moins une zone virtuelle $Z_{iv}$ non associées à une sonde.

La fonction d'interpolation est par exemple :

- une fonction d'interpolation par barycentre
- une fonction d'interpolation par convolution avec un modèle.

Selon une variante, l'invention comporte en outre des étapes de calcul d'au moins une valeur estimée de niveau d'irradiation $IS_{iv}(t)$, une fonction d'interpolation temporelle.

Selon une autre variante, ladite fonction d'interpolation est réalisée par application d'un traitement de calcul prenant en compte une représentation de la morphologie humaine. Cette représentation peut être soit une morphologie générique, soit personnalisée de manière semi-générique, soit spécifique au patient soumis à ladite irradiation.

Selon un mode de mise en œuvre particulier, ladite étape d'interpolation est réalisée par application d'un traitement de calcul prenant en compte la position relative P(t) de la source, desdites sondes et/ou du patient. La position relative de la source par rapport au patient est connue par exemple par les informations de position X,Y,Z de la table et/ou de la position angulaire du tube, ou par les données fournies par un télémètre, ou une caméra vidéo ou un système de triangulation.

Avantageusement, ladite étape d'interpolation spatiale est réalisée par application d'un traitement de calcul prenant en compte les caractéristiques C(t) de l'installation délivrant les doses d'irradiation (émission, détection, traitement et affichage du signal telles que la tension, la puissance, la largeur d'irradiation, etc...).

L'invention concerne aussi un équipement de mesure et de représentation des doses locales d'irradiation selon au moins deux dimensions comportant une pluralité de sondes $S_i$, sensibles aux rayonnements et un calculateur commandé par un code informatique pour l'exécution du procédé susvisé.

Selon une variante, une partie au moins desdites sondes $S_i$, est associée à un marqueur radio-opaque.

Selon une autre variante, chacun desdits marqueurs radio-opaque comporte un identifiant distinctif.

Avantageusement, lesdites sondes $S_i$, sont disposées selon une topologie prédéterminée sur un support tridimensionnel adapté à la morphologie de la cible [humaine ou non] à irradier.

## Description détaillée d'un exemple non limitatif de l'invention

L'invention sera mieux comprise à la lecture de la description qui va suivre, donnée uniquement à titre d'exemple et faite en se référant aux dessins annexés, sur lesquels :

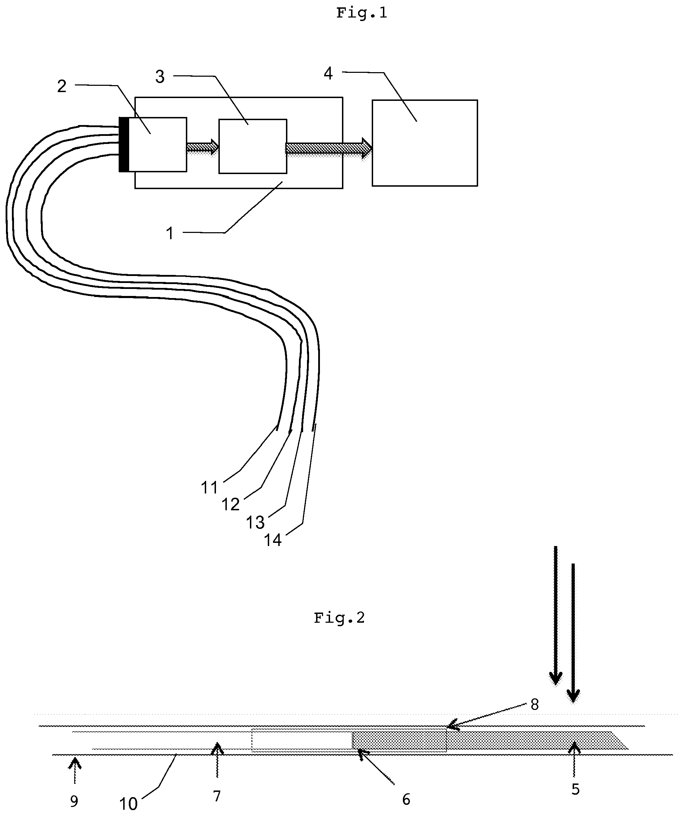

- la figure 1 est une vue schématique d'un dispositif de détermination de la dose selon l'invention
- la figure 2 est une vue schématique en coupe longitudinale d'une sonde mise en oeuvre par l'invention

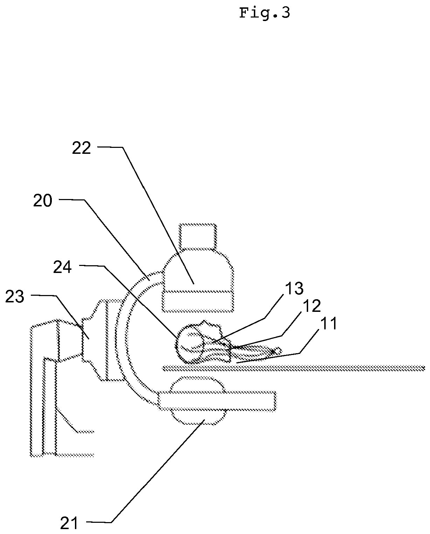

- la figure 3 est une vue schématique d'un équipement de neuro-radiologie selon l'invention
- la figure 4 est une vue schématique d'un équipement sous forme d'une ceinture selon l'invention.

Contexte de l'invention

Le but de l'invention est de fournir des données relatives à l'irradiation d'un patient de manière plus complète afin d'améliorer la qualité des soins grâce à une meilleure analyse de chaque exposition, à l'identification des sources possibles de variations, et à l'amélioration des protocoles et des examens. Aussi, l'invention permet de mettre en évidence tout dysfonctionnement ou dérive de l'appareil émetteur de rayonnements en temps réel.

L'invention propose de manière générale un procédé d'estimation cartographique en temps réel des doses reçues lors d'une procédure de radiologie interventionnelle, associée à un dispositif de mesure de dose.

Le dispositif permet de cartographier en temps réel la dose déposée à la peau, en 3D, de manière personnalisée et pour les différents domaines de la radiologie interventionnelle (neurologie, pathologie vasculaire, pathologie thoracique, cancérologie, gynécologie, etc.).

Du fait de la pluralité des techniques et des domaines concernés, de nombreux risques sont inhérents à la radiologie interventionnelle, notamment les différentes vigilances dont font partie les effets indésirables des rayons X sous la forme d'événements significatifs de radioprotection. Les techniques de radiologie interventionnelle interviennent en général sur les parties du corps suivantes :

- L'abdomen (intestin, reins, foie, estomac) ;
- Le système nerveux centrale (cerveau, moelle épinière) ;
- La cage thoracique (système respiratoire, poumons) ;
- Le système cardiovasculaire (artères, veines) ;
- L'appareil musculo-squelettique (os, articulations, rachis) ;
- L'appareil génito-urinaire (organes reproducteurs, système urinaire).

Les doses délivrées aux patients en radiologie interventionnelle dépassent fréquemment la valeur de 200mGy, c'est-à-dire la limite conventionnelle des « faibles » doses, et atteignent souvent quelques grays. Les effets possibles de l'irradiation ne sont plus seulement de nature stochastique et on peut observer également des effets déterministes (exemple : radiodermites).

La dose absorbée par les différents organes ne pouvant pas être mesurée en temps réel sur les patients, faute de matériel, l'estimation des doses équivalentes s'effectue par la mesure de dose sur des fantômes anthropomorphiques ou par l'utilisation de logiciels qui simulent les interactions des rayonnements sur des fantômes mathématiques ou sur des données acquises sur le patient. Cependant le PDS ne reflète pas fidèlement l'importance de la dose maximale à la peau et son utilisation ne sera possible que dans des conditions particulières et spécifiques de procédures, d'installation et d'opérateurs. D'autre part, les relations entre le kerma dans l'air et le PDS sont complexes et ne sont applicables que dans des conditions spécifiques de réalisation.

Les caractéristiques du patient (position, épaisseur, taille, poids) ne sont pas prises en compte, de même que l'orientation du faisceau ou ses caractéristiques physiques (dont la composante de rétrodiffusé est dépendante) et/ou les distances réelles entre la source et le patient. De manière générale, la contribution de la scopie au PDS total peut être de l'ordre de 30% pour les procédures cardiaques diagnostiques et de 50% pour les procédures thérapeutiques. Même si l'enregistrement du temps de scopie est accompagné du nombre de clichés de graphie et du poids du patient, cette évaluation présente une grande incertitude sur la dose réelle, allant de +130% à -70%, étant entendu que beaucoup d'appareil émetteurs de rayonnements ionisants (RI) ne fournissent pas les caractéristiques du faisceau pour chaque séquence de scopie mais juste un temps d'irradiation et une dose de scopie pour tout l'examen. Par exemple, une dose estimée à 2Gy pourrait en réalité avoir une valeur probable entre 0.6 et 4.6Gy. Durant la procédure, le niveau d'exposition doit être connu à tout moment et l'opérateur doit être averti lors de l'atteinte de seuils d'alerte.

L'exercice de la radiologie interventionnelle est confronté à la révélation de nombreux accidents d'irradiation amenant à améliorer la prise en compte de la gestion de la dose. De nombreuses procédures sont susceptibles d'induire des lésions cutanées et l'incidence des effets déterministes augmente avec le poids du patient, la nature et la complexité de l'intervention et des expositions antérieures. Selon les procédures, les temps de scopie peuvent être particulièrement longs ce qui implique que l'ensemble des doses couvre toute la gamme des lésions cutanées possibles, de l'érythème à la nécrose cutanée. Le diagnostic de ces lésions peut poser des difficultés, notamment lorsque l'exposition est inconnue du clinicien. Il apparaît que celles-ci sont souvent localisées au niveau du dos, du scalp et du sein.

Description de l'équipement

L'équipement de mesure de dose comprend de manière connue un faisceau de sondes détectrices (11 à 14) basées sur une technologie à base de scintillateur/fibre optique. Ces sondes (11 à 14) sont reliées à un système de détection (1) comprenant au moins un photodétecteur (2) et un circuit électronique (3) exploitant les signaux délivrés par le photodétecteur (2) en informations numériques exploitées par un calculateur (4) exécutant un code informatique pour le traitement de ces informations.

Lors d'une procédure de radiologie interventionnelle la sonde (11 à 14) est soumise à des rayonnements X, sous l'action de ces derniers, le scintillateur (5) émet alors une quantité de lumière directement proportionnelle à la dose reçue.

Cette lumière est ensuite collectée et envoyée sur un ou plusieurs photodétecteurs (2). Le signal lumineux est converti en signal électrique puis traité par un circuit électronique (3) pour donner au final la dose/débit de dose délivré par l'appareil émetteur de rayonnements ionisants.

Détail de réalisation des sondes

La sonde (11 à 14) est composée d'au moins une fibre optique scintillante (5) organique ou inorganique sensible au rayonnement et reliée à une de ses extrémités (6) à une extrémité d'une fibre optique non scintillante (7) en plastique ou en silice par un fourreau de liaison (8). La fibre optique non scintillante (7) sert à transporter la lumière produite dans la partie scintillante.

Le fourreau (8) assurant la tenue mécanique peut être placé à l'intérieur ou à l'extérieur d'une gaine (10). Il permet le renfort mécanique du collage entre la fibre plastique (7) et la fibre scintillante (5), qui constitue une zone de fragilité.

L'autre extrémité de la fibre optique non scintillante (7) est dotée d'un système de connexion permettant le raccord optimal à une cellule d'un photodétecteur (2).

Pour respecter la radiotransparence des sondes (11 à 14), elles présentent un diamètre maximum de 1 mm de diamètre et des gaines opaques d'épaisseur maximale 1 mm. Par exemple dans le cas d'une gaine de type tube, l'épaisseur de la paroi de la gaine est de $250 \mu$m.

Pour assurer la ponctualité de la zone sensible (5), le fourreau (8) ainsi que la colle sont choisis de manière à produire un minimum de lumière parasite lorsqu'ils sont irradiés et limiter l'émission de lumière parasite des plastiques et solvants sous irradiation. Pour réduire encore ce parasitage, le fourreau (8) est de la taille minimale requise pour assurer sa fonction de renfort mécanique. De même, la quantité de colle utilisée est réduite au maximum. Ceci est d'autant plus important que la zone sensible (5) est petite par exemple de 3 à 5mm de long.

Système de détection

Les sondes (11 à 14) sont raccordées à un photomultiplicateurs (2) ou un photodétecteur par l'intermédiaire d'un connecteur, par exemple un connecteur de type « cookie » (architecture du connecteur développé par le CNRS libre de droit) ou, pour une sonde monovoie, un connecteur de type SMA-905.

Le photodétecteur (2) est par exemple constitué par un capteur de type Hamamatsu H10721-110 ou -210 (non commercial) ou multi-anodes Hamamatsu H8804, H12700, etc.

Il peut également être constitué de :

- Photodiode (SiPM), Photodiode à avalanche (APD), Multi-Pixel Photon Counter (MPPC) ;
- Photodétecteur à transfert de charges (capteurs CCD) ;
- Ou tout autre dispositif assurant la même fonction.

Partie électronique

De manière générale, à la sortie du photomultiplicateur (2), le signal électrique est traité par un circuit électronique (3), dans un premier temps par un discriminateur qui, via un seuil réglable, permet de déterminer le taux de comptage (nombre d'évènement/photon par unité de temps) et en particulier sélectionner les signaux générés dans le photodétecteur correspondant à 1 photon, 2 photons, ..., n photons.

La partie matérielle pour effectuer cette opération peut se présenter sous deux formes :

- Il peut être basé sur une technique ASIC. Dans ce cas il est possible d'utiliser par exemple une carte de détection Maroc3 (nom commercial) développée par la société Weeroc. Cette carte permet de traiter en parallèle les signaux analogiques en sortie des PM Multianode de Hamamatsu (64 voies). Le but principal de la carte MAROC3 est de mesurer la charge et non le comptage de photons. Néanmoins, celle-ci pourrait être utilisée en comptage de photons après modification du programme interne du FPGA.
- Il peut également être basé sur un circuit électronique discret. Une carte a été développée par nos soins et son architecture est semblable à celle développée pour le produit dédié à la scanographie à la différence qu'elle intègre un FPGA permettant le traitement multivoies en parallèle. La carte développée peut contenir de 1 à n voies (n étant le nombre de voies du photomultiplicateur (2) utilisé), connectées à au moins un photodétecteur.

Ces circuits permettent l'acquisition en parallèle des signaux issus d'un ou plusieurs photodétecteurs simples ou d'un ou plusieurs photodétecteurs multivoies de manière simultanée. Ces circuits sont élaborés de manière à pouvoir définir des seuils de détection (ainsi que des valeurs de gain) pour chaque voie. Ceci permet de corriger les fluctuations dues aux photodétecteurs ou aux différentes voies électroniques.

La carte électronique (3) reçoit un signal à la sortie du photomultiplicateur (2) via un pont de résistances assurant une polarisation à une tension 2,5 V. Ensuite, un comparateur permet de sélectionner selon un niveau de tension prédéfini et de transformer le signal analogique en signal numérique TTL. Ce dernier est soit directement envoyé vers un compteur dans un FPGA ou bien mis en forme (génération d'un monostable) avant d'être compté.

Les données sont ensuite transmises à un équipement de contrôle et d'affichage de manière filaire, via USB ou Ethernet par exemple ou par voie sans-fil, via Wifi ou Bluetooth par exemple.

Un écran déporté ou non, placé par exemple au niveau des écrans de visualisation dans la salle d'intervention, permet la visualisation en temps réel du cumul de doses et/ou de la dose instantanée reçue par le patient. Les données peuvent être transférées sur cet écran par réseau filaire ou vie sans-fil comme précédemment.

Le photomultiplicateur (2), la carte électronique (3) et le calculateur (4) sont logés dans un boitier placé en dehors du champ de rayonnement de manière à ne pas être parasité pas le flux de rayonnement X. Il peut, en particulier, être positionné en bout de table de manière à ne pas déranger le patient ni le manipulateur radio et/ou le médecin interagissant avec le patient et peut fonctionner sur batterie.

## Application à la neuro-radiologie

La radiologie interventionnelle intervient dans différents domaines de la médecine. On peut par exemple citer la neuro-radiologie et la cardio-radiologie interventionnelle. Les sondes dosimétriques doivent alors répondre aux différents besoins et contraintes inhérentes à chaque domaine. Leur géométrie sera donc par exemple différente selon que l'on se trouve en neuro-radiologie ou en cardio-radiologie.

Pour les procédures au niveau du crâne (neuro-radiologie), l'équipement de radiologie est constitué de façon connue par une tête rotative (20) pouvant être déplacée autour de la tête du patient, sur laquelle une source (21) de rayons X et une unité de radiographie (22) sont fixées diamétralement à l'opposé l'une par rapport à l'autre. Un bras de positionnement (23) immobilise la tête du patient de façon reproductible.

La sonde peut être disposée selon une topologie prédéterminée ou non sur un support tridimensionnel adapté à la morphologie de la cible présenté par exemple sous la forme d'un bonnet (24), intégrable aux têtières ou à poser directement sur le crâne du patient. Ce bonnet sert de support pour le positionnement de l'extrémité d'une ou de plusieurs fibres (11 à 13) reliées soit à un photodétecteur multicanal (préférentiellement un PMT), soit à plusieurs photodétecteurs (préférentiellement des PMT) si par exemple le nombre de fibres n'est pas très important.

## Autres applications

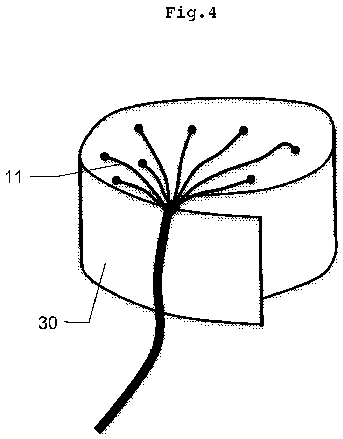

Pour les procédures au niveau du thorax ou sur la zone abdo-pelvienne, le support tridimensionnel peut se présenter sous la forme d'une ceinture (30) comme illustrée par la figure 4 et peut également supporter plusieurs fibres (11) réparties de manière homogène (espacement des zones constant) ou non selon les zones d'intérêt.

## Traitements logiciels

La partie logicielle permet de visualiser en temps réel (inférieure à la seconde avec rafraîchissement des données toutes les 500 ms par exemple) la dose déposée à la peau du patient avec une résolution spatiale dépendant de la surface d'intérêt et du nombre de capteurs.

Le programme d'ordinateur permet également de cartographier les dépôts de dose grâce à une reconstruction/ modélisation 3D du patient pour exemple à partir d'images du patient, des données relatives à la dose déposée durant la procédure interventionnelle (images patient, cartographie issues des DACS ou des constructeurs, dicom sr, autres données constructeur en temps réel, ou détecteurs type gafchromic ®) et de la dose mesurée pour les différents points d'intérêt par les sondes (11 à 14).

Les données DICOM sont définies par un standard pour la gestion informatique des données issues de l'imagerie médicale. Ce standard définit une structure organisée d'une suite de champs, dont les pixels de l'image correspondent à un champ particulier.

Chaque champ est défini par :

    a) pour les encodages explicites :

- étiquette (tag)
- représentation de valeur (VR - Value Representation) encodée par deux caractères
- longueur de la valeur
- valeur

    b) pour les encodages implicites :

- étiquette (tag)
- longueur de la valeur
- valeur

Une étiquette est constituée de :

- numéro de groupe (group number) encodé par deux octets ;
- numéro d'élément (element number) encodé par deux octets.

Les données DICOM relatives à la dose déposée et aux caractéristiques machines sont accessibles de manière différée et/ou en temps réel lorsque les installations radiologiques le permettent.

Par exemple, la modélisation du patient sera réalisée à partir d'un examen scanographique réalisé en amont de l'intervention.

La cartographie de dose peut être représentée par un code couleur. Des seuils d'alerte, définis plus haut, permettent de rendre compte des dépassements de la dose maximale à la peau (point chaud).

Cette solution est réalisée de manière à pouvoir être associée à un logiciel de calcul de la distribution de la dose. Cela permet :

- D'optimiser ces logiciels en y apportant une mesure réelle de la dose en différents points du patient.
- De rendre plus précise la cartographie de la dose mesurée en x points (interpolation des points de mesure).

### Première variante

Dans le cas où l'installation permet de disposer des données relatives à la dose déposée durant la procédure interventionnelle en temps réel, le programme d'ordinateur peut dans un premier temps modéliser la peau du patient en réalisant une extraction de contour externe du patient à partir des images scanner du patient, passé préalablement à l'acte de radiologie interventionnelle. Ce contour externe est ensuite converti en un maillage de surface de résolution prédéterminée. Le programme d'ordinateur projette ensuite sur la surface du maillage du contour externe du patient chaque événement d'irradiation décrit dans le fichier DICOM SR issu de l'appareil de radiologie interventionnelle (en temps réel ou en différé de l'intervention). Le programme d'ordinateur cumule les différents évènements d'irradiation par unité de maillage ce qui permet après corrections mathématiques (de type facteur de rétrodiffusion) de disposer d'une cartographie différentielle de la dose cumulée en mGy. Cette première cartographie étant basée sur les informations issues des DICOM SR, cette dernière doit être également corrigée des informations de dose réellement mesurée pour les différents points d'intérêt par les sondes (11 à 14) pour obtenir une cartographie de dose absolue. Cette cartographie absolue réalisée à partir des données DICOM de l'appareil de radiologie interventionnelle complétée des mesures ponctuelles de dose réalisées avec l'appareil de mesure est convertie en un format standard 3D (exemple : type vtk) afin d'être visualisée.

L'historique des résultats obtenus pour chaque patient est enregistré dans une base de données associée à l'équipement de mesure.

Les résultats des traitements sont affichés sur un écran déporté et exploités par un système d'alerte. Etant donné les recommandations et réglementations en vigueur, le système comporte un système d'alerte au dépassement de la dose maximale à la peau de 2Gy, puis tous les 0.5 Gy suivants.

### Deuxième variante

Dans le cas où l'installation ne permet pas de disposer des données relatives à la dose déposée durant la procédure interventionnelle en temps réel, une cartographie indicative des doses réellement mesurées pour les différents points d'intérêt par les sondes (11 à 14) extrapolée par la méthode des barycentres pourra être affichée pendant l'intervention et extrapolée par une des techniques décrites précédemment pour plus de précision en fin d'examen.

### Troisième variante

Toujours dans le cas où l'installation ne permet pas de disposer des données relatives à la dose déposée durant la procédure interventionnelle en temps réel, le logiciel de calcul de la distribution de la dose détermine cette dernière à partir de films gafchromic® et d'au moins une mesure de dose pour au moins un point d'intérêt situé sur le film gafchromic® par au moins une sonde, l'association de ces deux moyens de mesure permet de s'abstenir de devoir étalonner les lots de films.

### Méthode d'étalonnage

La solution telle que proposée ci-dessus mesure une dose et un débit de dose déposés dans la sonde. Selon le positionnement de la sonde, ceci est équivalent à une mesure de dose à la peau. Par exemple, on peut mesurer une dose à la peau au niveau du dos ou du bassin pour les interventions de type cardiaques, d'embolisations utérines, d'angioplastie rénale, etc. et une mesure de dose à la peau au niveau du crâne pour les interventions en neuroradiologie (traitement des Malformations artério-veineuses cérébrales (MAV), des anévrismes intracrâniens, etc.).

Le système est étalonné par rapport à une chambre d'ionisation de référence en terme de kerma dans l'air. Le résultat obtenu avec la chambre d'ionisation est donné en mGy. Le facteur d'étalonnage du système est donc donné en mGy/TC (TC = Taux de Comptage). Il peut également être calibré par rapport à un dosimètre type TLD ou gafchromic®.

Dans le cas d'une sonde multipoints, chaque voie sera étalonnée indépendamment des autres. Un facteur d'étalonnage sera alors défini pour chaque voie.

Dans le cas d'un photodétecteur type PMT multi-anodes, l'effet de cross-talk doit être pris en compte, soit à partir des données constructeur, soit par des mesures réalisées en interne.

### Calcul des doses par interpolation

A partir des données fournies par les sondes (11 à 14) et traitées par le circuit (3) et le calculateur (4), on obtient pour chacun des points de détection $S_i$ une série de mesures $IS_i(t)$, t désignant le moment de l'acquisition des données. Ces données sont converties en valeurs $DS_i(t)$ correspondant à la dose de rayonnement appliquée à chacune des zones Z associées à une sonde $S_i$, en fonction d'une table de calibration. Ces variables sont enregistrées dans une base de données pour appliquer en temps réel un traitement permettant de calculer des doses en des points qui n'ont pas fait l'objet d'acquisition par une sonde (11 à 14), et définir ainsi une représentation cartographique de haute résolution des doses reçues par le patient.

Le calculateur exploite les variables enregistrées dans la base de données pour réaliser un calcul d'interpolation spatiale d'au moins une valeur estimée de niveau d'irradiation $IS_{iv}(t)$ d'au moins une zone virtuelle $Z_{iv}$ non associée à une sonde et enregistrer des valeurs $DS_v(t)$ correspondant à la dose de rayonnement estimée en une zone dépourvue de sonde (11 à 14).

## Revendications

1. Procédé de mesure et de représentation en temps réel du niveau des doses locales d'irradiation selon au moins deux dimensions comportant :

> • une étape de positionnement de N sondes $S_i$, sensibles aux rayonnements irradiants correspondant chacune à une zone locale $Z_i$ selon une topologie connue,
> • une étape d'acquisition par chacune desdites sondes du niveau d'irradiation $IS_i$ détecté et d'enregistrement périodique des valeurs numériques $IS_i(t)$
> • une étape de conversion desdites valeurs numériques $IS_i(t)$ en valeurs $DS_i(t)$ correspondant à la dose de rayonnement appliquée à chacune des zones Z associées à une sonde $S_i$, en fonction d'une table de calibration ledit procédé comportant outre, pendant la séquence de mesure, des étapes de calcul d'interpolation spatiale d'au moins une valeur estimée de niveau d'irradiation $IS_{iv}(t)$ d'au moins une zone virtuelle $Z_{iv}$ non associées à une sonde, ledit procédé étant **caractérisé en ce que** ladite sonde (11 à 14) est composée d'au moins une fibre optique scintillante (5) organique ou inorganique sensible au rayonnement et reliée à une de ses extrémités (6) à une extrémité d'une fibre optique non scintillante (7) en plastique ou en silice par un fourreau de liaison (8).

2. Procédé de mesure et de représentation en temps réel selon la revendication 1 **caractérisé en ce qu'**il comporte en outre des étapes de calcul d'au moins une valeur estimée de niveau d'irradiation $IS_{iv}(t)$, une fonction d'interpolation temporelle.

3. Procédé de mesure et de représentation en temps réel selon la revendication 1 **caractérisé en ce que** ladite étape d'interpolation spatiale est réalisée par application d'un traitement de calcul prenant en compte une représentation de la morphologie humaine générique, personnalisée, ou la morphologie du patient soumis à ladite irradiation.

4. Procédé de mesure et de représentation en temps réel selon la revendication 1 **caractérisé en ce que** ladite étape d'interpolation spatiale est réalisée par application d'un traitement de calcul prenant en compte la position relative P(t) de la source desdites sondes et/ou du patient.

5. Procédé de mesure et de représentation en temps réel selon la revendication 1 **caractérisé en ce que** ladite étape d'interpolation spatiale est réalisée par application d'un traitement de calcul prenant en compte les caractéristiques C (t) de l'installation délivrant les doses d'irradiation.

6. Procédé de mesure et de représentation en temps réel selon la revendication 1 **caractérisé en ce que** ladite étape d'interpolation spatiale est réalisée par application d'un traitement de calcul prenant en compte les résultats obtenus avec d'autres détecteurs ou systèmes d'évaluation de dose patient utilisés en routine clinique pour estimer les doses reçues par le patient en une ou plusieurs dimensions.

7. Equipement de mesure et de représentation en temps réel des doses locales d'irradiation selon au moins deux dimensions comportant une pluralité de sondes $S_i$, (11 à 14) sensibles aux rayonnements et un calculateur (4) commandé par un code informatique pour l'exécution du procédé conforme à la revendication 1 ledit équipement étant **caractérisé en ce que** ladite sonde (11 à 14) est composée d'au moins une fibre optique scintillante (5) organique ou inorganique sensible au rayonnement et reliée à une de ses extrémités (6) à une extrémité d'une fibre optique non scintillante (7) en plastique ou en silice par un fourreau de liaison (8) et en qu'une partie au moins desdites sondes $S_i$, (11 à 14) est associée à un marqueur radio-opaque comportant un identifiant distinctif.

8. Equipement de mesure en temps réel selon la revendication 7 **caractérisé en ce que** lesdites sondes $S_i$, sont disposées selon une topologie prédéterminée sur un support tridimensionnel adapté à la morphologie de la cible à irradier.

## Patentansprüche

1. Verfahren zum Messen und Darstellen in Echtzeit der Stärke von lokalen Bestrahlungsdosen in mindestens zwei Dimensionen, umfassend:

> • einen Schritt einer Positionierung von N Sonden $S_i$, die gegenüber bestrahlender Strahlung empfindlich sind, die jeweils einem lokalen Bereich Zi gemäß einer bekannten Topologie entsprechen,

• einen Schritt einer Erfassung durch jede der Sonden der detektierten Bestrahlungsstärke $IS_i$ und einer periodischen Aufzeichnung der digitalen Werte ISi(t)

• einen Schritt einer Umwandlung der digitalen Werte ISi(t) in Werte DSi(t), die der Strahlungsdosis entsprechen, die auf jeden der Bereiche Z angewendet wird, die einer Sonde $S_i$ zugeordnet sind, in Abhängigkeit von einer Kalibrierungstabelle, wobei das Verfahren ferner während der Messsequenz Schritte zum Berechnen einer räumlichen Interpolation von mindestens einem Schätzwert der Bestrahlungsstärke $IS_{iv}(t)$ von mindestens einem virtuellen Bereich $Z_{iv}$, der keiner Sonde zugeordnet ist, umfasst, wobei das Verfahren **dadurch gekennzeichnet ist, dass** die Sonde (11 bis 14) aus mindestens einer strahlungsempfindlichen organischen oder anorganischen szintillierenden Lichtleitfaser (5) besteht, die an einem ihrer Enden (6) mit einem Ende einer nicht szintillierenden Lichtleitfaser (7) aus Kunststoff oder aus Siliziumdioxid über eine Verbindungshülse (8) verbunden ist.

2. Verfahren zum Messen und Darstellen in Echtzeit nach Anspruch 1, **dadurch gekennzeichnet, dass** es ferner die Schritte zum Berechnen von mindestens einem Schätzwert der Bestrahlungsstärke $IS_{iv}(t)$, eine zeitliche Interpolationsfunktion umfasst.

3. Verfahren zum Messen und Darstellen in Echtzeit nach Anspruch 1, **dadurch gekennzeichnet, dass** der Schritt der räumlichen Interpolation durch Anwendung einer Berechnungsverarbeitung durchgeführt wird, die eine Darstellung der generischen, personalisierten menschlichen Morphologie oder der Morphologie des Patienten berücksichtigt, der der Bestrahlung unterzogen wird.

4. Verfahren zum Messen und Darstellen in Echtzeit nach Anspruch 1, **dadurch gekennzeichnet, dass** der Schritt der räumlichen Interpolation durch Anwendung einer Berechnungsverarbeitung durchgeführt wird, die die relative Position P(t) der Quelle der Sonden und/oder des Patienten berücksichtigt.

5. Verfahren zum Messen und Darstellen in Echtzeit nach Anspruch 1, **dadurch gekennzeichnet, dass** der Schritt der räumlichen Interpolation durch Anwendung einer Berechnungsverarbeitung durchgeführt wird, die die relative Eigenschaften C(t) der Einrichtung berücksichtigt, die die Bestrahlungsdosen abgibt.

6. Verfahren zum Messen und Darstellen in Echtzeit nach Anspruch 1, **dadurch gekennzeichnet, dass** der Schritt der räumlichen Interpolation durch Anwendung einer Berechnungsverarbeitung durchgeführt wird, die die Ergebnisse berücksichtigt, die mit anderen Detektoren oder Systemen zum Beurteilen einer Patientendosis erhalten werden, die in einer klinischen Routine verwendet werden, um die durch den Patienten erhaltenen Dosen in einer oder mehreren Dimensionen abzuschätzen.

7. Ausrüstung zum Messen und Darstellen der lokalen Bestrahlungsdosen in Echtzeit in mindestens zwei Dimensionen, die eine Vielzahl von Sonden $S_i$ (11 bis 14) umfasst, die gegenüber Strahlung empfindlich sind, sowie einen Rechner (4), der durch einen Computercode zum Ausführen des Verfahrens nach Anspruch 1 gesteuert wird, wobei die Ausrüstung **dadurch gekennzeichnet ist, dass** die Sonde (11 bis 14) aus mindestens einer organischen oder anorganischen strahlungsempfindlichen szintillierenden Lichtleitfaser (5) besteht, die an einem ihrer Enden (6) über eine Verbindungshülse (8) mit einem Ende einer nicht szintillierenden Lichtleitfaser (7) aus Kunststoff oder Siliziumdioxid verbunden ist, und dass mindestens ein Teil der Sonden $S_i$ (11 bis 14) einem röntgendichten Marker zugeordnet ist, der einen unterscheidenden Identifikator umfasst.

8. Ausrüstung zum Messen in Echtzeit nach Anspruch 7,
**dadurch gekennzeichnet, dass** die Sonden $S_i$ gemäß einer vorbestimmten Topologie auf einem dreidimensionalen Träger angeordnet sind, der an die Morphologie des zu bestrahlenden Ziels angepasst ist.

**Claims**

1. Method for measuring and representing, in real time, the level of local irradiation doses in at least two dimensions, comprising:

• a step of positioning N probes $S_i$, which are sensitive to irradiating radiation, each corresponding to a local zone Zi according to a known topology,

• a step of acquiring, by each of said probes, the level of irradiation $Isi_i$ detected and periodically recording the numerical values ISi(t)

• a step of converting said numerical values ISi(t) into values DSi(t) corresponding to the radiation dose applied to each of the zones Z associated with a probe $S_i$, as a function of a calibration table, said method further comprising, during the measurement sequence, steps of calculating the spatial interpolation of at least one estimated irradiation level value $IS_{iv}(t)$ of at least one virtual zone $Z_{iv}$ not associated with a probe, said method being **characterized in that** said probe (11 to 14) consists of at least one organic or inorganic scintillating optical fiber (5) which is sensitive to radiation and connected at one of its ends (6) to one end of a non-scintillating optical fiber (7) made of plastic or silica by a connecting sleeve (8).

2. Real-time measurement and representation method according to claim 1, **characterized in that** it further comprises steps of calculating at least one estimated irradiation level value $IS_{iv}(t)$, a temporal interpolation function.

3. Real-time measurement and representation method according to claim 1, **characterized in that** said spatial interpolation step is carried out by applying a calculation process that takes into account a representation of the generic human morphology, or personalized, or the morphology of the patient subjected to said irradiation.

4. Real-time measurement and representation method according to claim 1, **characterized in that** said spatial interpolation step is carried out by applying a calculation process that takes into account the relative position P(t) of the source of said probes and/or of the patient.

5. Real-time measurement and representation method according to claim 1, **characterized in that** said spatial interpolation step is carried out by applying a calculation process that takes into account the characteristics C(t) of the installation delivering the irradiation doses.

6. Real-time measurement and representation method according to claim 1, **characterized in that** said spatial interpolation step is carried out by applying a calculation process that takes into account the results obtained with other detectors or systems for patient dose evaluation used in clinical routine to estimate the doses received by the patient in one or more dimensions.

7. System for measuring and representing, in real time, local irradiation doses in at least two dimensions, comprising a plurality of probes $S_i$,(11 to 14) which are sensitive to radiation, and a computer (4) controlled by a computer code for executing the method according to claim 1, said system being **characterized in that** said probe (11 to 14) consists of at least one organic or inorganic scintillating optical fiber (5) which is sensitive to radiation and connected at one of its ends (6) to one end of a non-scintillating optical fiber (7) made of plastic or silica by a connecting sleeve (8), and **in that** at least some of said probes Si, (11 to 14) are associated with a radiopaque marker comprising a distinctive identifier.

8. Real-time measurement system according to claim 7, **characterized in that** said probes $S_i$, are arranged according to a predetermined topology on a three-dimensional support adapted to the morphology of the target to be irradiated.

Fig.1

Fig.2

Fig.3

Fig.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2003047694 A2
- FR 2981757
- EP 1581824 A
- US 14338464 B
- US 14510815 B
- CN 1736333
- US 20130105692 A1
- US 6330299 B
- US 2008149835 A
- US 5880475 A

**Littérature non-brevet citée dans la description**

- **NISHIKIDO, F. ; MORITAKE, T. ; ITO, H. ; YAMAYA, T.** *A prototype real-time dose distribution monitoring system using plastic scintillators connected to optical fiber for interventional radiology,* 2013
- **CHIDA PHD, K. et al.** *Real-time patient radiation dosimeter for use in interventional radiology,* 2016
- **THOMAS, DUNCAN.** *Statistical Methods in Environmental Epidemiology,* 2009